# EUROPÄISCHE PATENTSCHRIFT

(11) **EP 4 140 441 B1**
(45) Veröffentlichungstag und Bekanntmachung des Hinweises auf die Patenterteilung: **04.03.2026**
(21) Anmeldenummer: 21183816.4
(22) Anmeldetag: 05.07.2021
(51) Int. Cl.: A61C 9/00, G01L 1/24, G03F 7/00, B01J 13/02, A61C 19/05

(54) **MIKROKAPSEL ZUR VERWENDUNG IN DER BEHANDLUNG VON ZAHNFEHLSTELLUNGEN DURCH KUNSTSTOFFSCHIENEN BZW. ALIGNER**
MICROCAPSULE FOR USE IN THE TREATMENT OF TOOTH MISALIGNMENT BY MEANS OF PLASTIC SPLINTS OR ALIGNERS
MICROCAPSULE À UTILISER DANS LE TRAITEMENT DES MALPOSITIONS DENTAIRES PAR GOUTTIÈRES EN PLASTIQUE OU ALIGNEURS

(43) Veröffentlichungstag der Anmeldung: 01.03.2023
(73) Patentinhaber: Dentsply Sirona Inc., York, PA 17401 (US); Sirona Dental Systems GmbH, 64625 Bensheim (DE)
(72) Erfinder: Brandes, Christoph, 64625 Bensheim (DE); Van Kempen, Jonathan Merlin, 64625 Bensheim (DE)
(74) Vertreter: Allen, Caroline Margaret

(56) Entgegenhaltungen:
- US-A- 3 469 439
- US-A- 5 309 196
- US-A- 5 474 967
- US-A- 5 941 256
- US-A1- 2009 117 507
- US-A1- 2017 100 219

## Beschreibung

### TECHNISCHES GEBIET DER ERFINDUNG

Die vorliegende Erfindung bezieht sich auf kieferorthopädische Behandlungsmethoden, insbesondere auf die Behandlung von Zahnfehlstellungen durch Kunststoffschienen (englisch aligner) bzw. auf die Aligner-Therapie.

### HINTERGRUND DER ERFINDUNG

Die Aligner-Therapie (von "to align" = "ausrichten") ist eine kieferorthopädische Behandlungsmethode zur weitgehend unsichtbaren Behandlung von leichteren bis schweren Zahnfehlstellungen, die mit einer Sequenz von individuell gefertigten, dünnen und durchsichtigen Kunststoffschienen (auf Englisch" aligner") arbeitet. Die Kunststoffschienen werden durch Tiefziehverfahren von Thermoform-Folien oder durch additive Herstellungsverfahren wie 3D-Drucken hergestellt.

Für den Erfolg der Therapie ist es erforderlich, dass die Aligner auf den Zahn eine ausreichend hohe Kraft aufbringen. Im Laufe des Tragens des Aligners deformiert sich das Kunststoffmaterial aus dem der Aligner hergestellt wurde. In Folge gibt die Kraft, die auf den Zahn aufgebracht wird, nach und eine wirksame Therapie kann nicht mehr gewährleistet werden. Daher verwendet der Arzt in regelmassigen Abständen einen neuen Aligner damit die Therapie erfolgreich fortgesetzt werden kann.

Für die Wirksamkeit der Therapie ist es wichtig, dass die Aligner möglichst über die Dauer der Anwendung von gleichbleibender Qualität sind.

US3469439 offenbart einen Herstellungsartikel zum Messen verteilter Kräfte über eine Oberfläche, der aus einer im Wesentlichen homogenen Mischung diskreter Gruppen von Mikrokapseln mit unterschiedlicher Druckempfindlichkeit besteht.

### OFFENBARUNG DER ERFINDUNG

Aktuell ist den Erfindern kein Stand der Technik bekannt mit der Arzt/ Patient einfach die Wirksamkeit der Behandlung feststellen und den Fortschritt der Behandlung verfolgen kann und z.B. den Wechselzeitpunkt für einen neuen Aligner bestimmen kann.

Das Ziel der vorliegenden Erfindung ist die Bereitstellung von Mikrokapseln mit dem die Wirksamkeit der Therapie festgestellt und der Fortschritt der Therapie verfolgt werden kann.

Dieses Ziel wurde durch die Mikrokapsel nach Anspruch 1 erreicht. Die Gegenstände der abhängigen Ansprüche beziehen sich auf Weiterentwicklungen und bevorzugte Ausführungsformen.

Die erfindungsgemäße Mikrokapsel kann in der Behandlung von Zahnfehlstellungen durch Kunststoffschienen bzw. Aligner verwendet werden. Die Mikrokapsel ist wenige µm groß (vorzugsweise 0,5µm -200µm) und weist eine Schale aus Kunstsoff, Glas oder Keramik auf. Die Schale ist im Inneren mit einer biokompatiblen Flüssigkeit gefüllt. Die Schale bricht auf, wenn sie eine definierte Kraft erfährt und die Flüssigkeit, die optisch detektiert werden kann vorzugsweise durch einen Farbumschlag oder UV-Licht, setzt sich frei.

Die Mikrokapsel kommt zur Anwendung zwischen Zahn und der inneren Seite des Aligners. Das Aufbringen der Mikrokapseln kann dabei vorzugsweise auf verschiedene Arten erfolgen: z.B. als Spray, Paste, Puder, Folie bzw. als aufklebbare Folie.

Die Mikrokapseln können nicht nur durch den Arzt, sondern durch den Patient selbst benutzt werden: Der Arzt kann die Wirksamkeit der Therapie feststellen und den Fortschritt der Therapie verfolgen. Der Patient kann den Zeitpunkt zum Wechseln des Aligner bestimmen und den Arzt aufsuchen bzw. nach Gebrauchsanleitung den Wechsel selbst vornehmen.

Gemäß der vorliegenden Erfindung wird ermöglicht, bei Alignern festzustellen ob auf den Zahn die minimal notwendige Kraft aufgebracht wird.

Gemäß der vorliegenden Erfindung wird es ferner ermöglicht, festzustellen, ob die Kraft auf die Zähne im Laufe des Tragens des Aligners einen notwendigen Grenzwert unter- oder überschreitet. Die Bestimmung der Kraft kann dabei sehr lokal erfolgen.

Gemäß der vorliegenden Erfindung wird ferner ermöglicht, dass der Arzt/Patient mittels der Mikrokapseln den Wechselzeitpunkt des Aligners angezeigt bekommen kann.

Vorzugsweise ist die Mikrokapsel mit einer farbigen Flüssigkeit gefüllt damit ein Farbeffekt entsteht und dem Arzt/Patient die Visualisierung ermöglicht wird, wenn sie bricht. Die Farben in den Mikrokapseln können im sichtbaren Wellenlängenbereich transparent sein und ihren Farbton erst nach dem Aufbrechen der Kapsel erhalten. Der Farbumschlag kann dabei durch eine Änderung des pH-Wertes oder eine Oxidation des Farbstoffes kommen. Auch der Farbumschlag durch die Reaktion von zwei oder mehr verwendeten Stoffen in den Mikrokapseln mit gleichen oder verschiedenen Sensitivitäten/Kräften des Aufbrechens ist möglich.

Vorzugsweise kann eine Kombination bzw. Mischungen von unterschiedlichen Typen von Mikrokapseln mit unterschiedlichen Farben verwendet werden, und jeweils mit verschiedenen Sensitivitäten/Kräften des Aufbrechens, um eine Kraftauflösung zu erreichen und um dies dem Arzt/Patienten zu visualisieren. Dadurch kann ein größerer Kraftbereich bestimmt werden.

### KURZBESCHREIBUNG DER ZEICHNUNGEN

In der nachfolgenden Beschreibung wird die vorliegende Erfindung anhand von Ausführungsbeispielen unter Bezugnahme auf die Zeichnungen näher erläutert, wobei
Abb.1 - zeigt eine schematische querschnittliche Darstellung einer Mikrokapsel nach einer Ausführungsform der Erfindung;

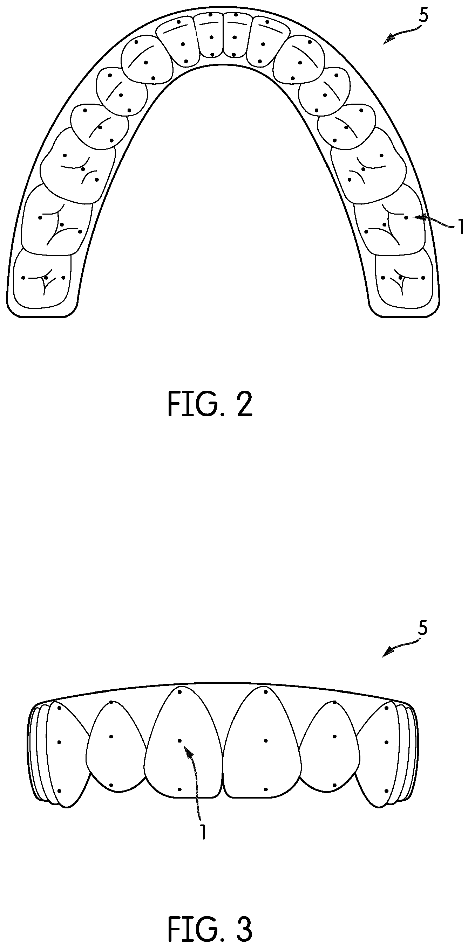

Abb.2 - zeigt ein schematische Darstellung eines Aligners von unten auf dessen innerer Seite Mikrokapseln aufgetragen wurden;
Abb.3 - zeigt ein schematische Darstellung eines Aligner von vorne auf dessen innerer Seite Mikrokapseln aufgetragen wurden.

Die in den Zeichnungen gezeigten Referenznummern bezeichnen die unten aufgeführten Elemente, auf die in der nachfolgenden Beschreibung der beispielhaften Ausführungsformen Bezug genommen wird.
1. Mikrokapsel
2. Schale
3. Flüssigkeit
4. Farbstoff
5. Aligner/ Kunststoffschiene

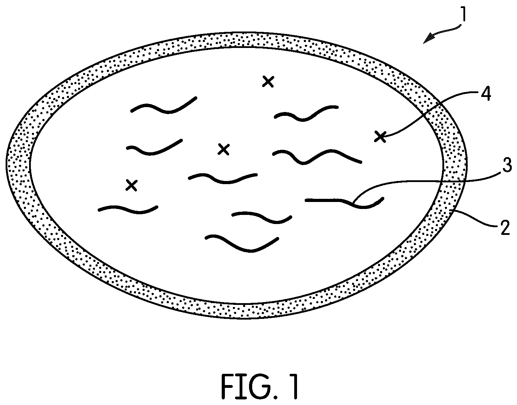

Abb.1 zeigt eine Mikrokapsel (1) nach einer Ausführungsform. Gemäß der vorliegenden Erfindung werden Mikrokapseln (1) in der Behandlung von Zahnfehlstellungen durch Kunststoffschienen (5) bzw. Aligner (5) verwendet. Diese sind wenige µm groß und haben jeweils eine Schale (2) aus Kunststoff oder Glas oder Keramik. Die Schale (2) ist im Inneren mit einer Flüssigkeit (3) gefüllt. Ferner bricht die Schale (2) auf, wenn sie eine definierte Kraft erfährt, und die Flüssigkeit (3), die optisch detektiert werden kann vorzugsweise durch einen Farbumschlag oder UV-Licht, setzt sich frei.

Nach einer bevorzugten Ausführungsform können die Mikrokapseln (1) mit einer Flüssigkeit (3) gefüllt sein die bei Freisetzung farbig ist/wird.

Für die erfolgreiche Anwendung eines Aligners (5) muss dieser je nach geplanter Behandlung die Kräfte zwischen 0,05N und 5N auf einen Zahn aufbringen. Dies resultiert in einer Druckspannung X= 0,01 bis 1 MPa die zwischen Zahn und Aligner (5) entsteht. Werden die Mikrokapseln (1), die sensitiv auf die Druckspannung X reagieren, zwischen Zahn und Aligner aufgebracht, kommt es zu einem Flüssigkeitsaustritt vorzugsweise einer Verfärbung, wenn die Kraft und damit die Spannung erreicht wird. Wird die Kraft nicht erreicht tritt keine Flüssigkeit (3) aus bzw. kein Farbeffekt auf.

Nach einer bevorzugten Ausführungsform werden unterschiedliche Mikrokapseln (1) kombiniert. Je nach geplanter Markierung und Farbe, können dabei verschieden gefüllte oder verscheiden sensitive Mikrokapseln (1) verwendet werden. Unterschiedliche Farbstoffe (4) können mit unterschiedlich, sensitiven Mikrokapseln (1) verwendet werden etwa ein gelber und ein grüner Farbstoff, die bei der gemeinsamen Freisetzung blau werden. Somit kann eine Kraftauflösung erreicht werden.

Dies wird mit dem folgendem Beispiel erklärt:
Mikrokapsel (1) nach Typ A reagiert bei 0, 5 MPa und verfärbt sich gelb
Mikrokapsel (1) nach Typ B reagiert bei 1,0 MPa und verfärbt sich grün Bei Spannungen unter 0,5 MPa kommt es zu keiner Verfärbung. Bei Spannungen zwischen 0,5MPa-1,0MPa kommt es zur gelben Färbung. Bei Spannungen >1,0MPa kommt es zu einer blauen Färbung (d.h. gelb + grün). Drei oder mehr unterschiedliche Mikrokapseln (1) können auch kombinierts werden für eine noch breitere Kraftauflösung zu erreichen.

Das Aufbringen der Mikrokapseln (1) kann dabei auf verschiedene Arten erfolgen. Nach unterschiedlicher Ausführungsformen werden die Mikrokapseln (1) als Spray, Paste, Folie, vorzugsweise als eine aufklebbare Folie, oder Puder bereitgestellt. Das Spray, die Paste, die Folie und das Puder können z.B. aus unterschiedlichen Typen von Mikrokapseln (1) oder alternativ nur aus einem Typ von Mikrokapseln (1) hergestellt werden.

## Patentansprüche

1. Mikrokapsel (1) zur Verwendung in der Behandlung von Zahnfehlstellungen durch Kunststoffschienen (5) bzw. Aligner (5), wobei
die Mikrokapsel (1) 0,5µm bis 200µm groß ist und eine Schale (2) aus Kunststoff oder Glas oder Keramik aufweist,
die Schale (2) im Inneren mit einer Flüssigkeit (3) gefüllt ist, und
die Schale (2) aufbricht wenn sie eine definierte Kraft erfährt und die Flüssigkeit (3) freisetzt, die optisch detektiert werden kann vorzugsweise durch einen Farbumschlag oder Beleuchtung mit UV Licht, wobei die Schale bei einer Druckspannung von mindestens 0,5 MPa aufbricht und wobei die gefüllte Flüssigkeit (3) bei Freisetzung farbig ist/wird.

2. Eine Kombination von Mikrokapseln (1) nach Anspruch 1, **gekennzeichnet dadurch, dass** die Mikrokapseln (1) Flüssigkeit (3) mit bei Freisetzung unterschiedlichen Farben aufweisen und jeweils bei verschieden definierten Kräfte aufbrechen.

3. Spray zur Verwendung in der Behandlung von Zahnfehlstellungen durch Kunststoffschienen bzw. Aligner **gekennzeichnet dadurch, dass** das Spray einen Typ oder eine Kombination von unterschiedlichen Typen von Mikrokapseln (1) nach einem der vorangehenden Ansprüche aufweist.

4. Paste zur Verwendung in der Behandlung von Zahnfehlstellungen durch Kunststoffschienen bzw. Aligner **gekennzeichnet dadurch, dass** die Paste einen Typ oder eine Kombination von unterschiedlichen Typen von Mikrokapseln (1) nach einem der vorangehenden Ansprüche 1 bis 2 aufweist.

5. Folie zur Verwendung in der Behandlung von Zahnfehlstellungen durch Kunststoffschienen bzw. Aligner **gekennzeichnet dadurch, dass** die Folie einen Typ oder eine Kombination von unterschiedlichen Typen von Mikrokapseln (1) nach einem der vorangehenden Ansprüche 1 bis 2 aufweist.

6. Die Folie nach Anspruch 5, **gekennzeichnet dadurch, dass** die Folie aufklebbar ist.

7. Puder zur Verwendung in der Behandlung von Zahnfehlstellungen durch Kunststoffschienen bzw. Aligner **gekennzeichnet dadurch, dass** das Puder einen Typ oder eine Kombination von unterschiedlichen Typen von Mikrokapseln (1) nach einem der vorangehenden Ansprüche 1 bis 2 aufweist.

8. Ein Aligner (5) und eine oder mehrere Mikrokapseln (1) die auf der inneren Seite des Aligners aufgetragen sind, wobei die oder jede Mikrokapsel nach Anspruch 1 ist.

## Claims

1. Microcapsule (1) for use in the treatment of tooth misalignment by means of plastic splints (5) or aligners (5), wherein
the microcapsule (1) is 0.5 µm to 200 µm in size and has a shell (2) made of plastic or glass or ceramic,
the shell (2) is internally filled with a liquid (3), and
the shell (2) breaks open when it experiences a defined force and releases the liquid (3), which can be detected optically, preferably by a colour change or illumination with UV light, wherein the shell breaks open at a compressive stress of at least 0.5 MPa and wherein the filled liquid (3) is/becomes coloured upon release.

2. Combination of microcapsules (1) according to claim 1, **characterised in that** the microcapsules (1) have a liquid (3) with different colours on release and each break open at differently defined forces.

3. Spray for use in the treatment of tooth misalignment by means of plastic splints or aligners, **characterised in that** the spray has a type or a combination of different types of microcapsules (1) according to any of the preceding claims.

4. Paste for use in the treatment of tooth misalignment by means of plastic splints or aligners, **characterised in that** the paste has a type or a combination of different types of microcapsules (1) according to any of the preceding claims 1 to 2.

5. Film for use in the treatment of tooth misalignment by means of plastic splints or aligners, **characterised in that** the film has a type or a combination of different types of microcapsules (1) according to any of the preceding claims 1 to 2.

6. Film according to claim 5, **characterised in that** the film can be adhesively bonded.

7. Powder for use in the treatment of tooth misalignment by means of plastic splints or aligners, **characterised in that** the powder has a type or a combination of different types of microcapsules (1) according to any of the preceding claims 1 to 2.

8. Aligner (5) and one or more microcapsules (1) applied to the inner side of the aligner, wherein the or each microcapsule is according to claim 1.

## Revendications

1. Microcapsule (1) à utiliser dans le traitement des malpositions dentaires par gouttières en plastique (5) ou aligneurs (5),
ladite microcapsule (1) mesurant entre 0,5 µm et 200 µm et comportant une enveloppe (2) en plastique ou en verre ou en céramique,
l'enveloppe (2) étant remplie intérieurement d'un liquide (3), et
ladite enveloppe (2) se rompant lorsqu'elle est soumise à une force définie et libérant le liquide (3) qui peut être détecté optiquement, de préférence par un changement de couleur ou par éclairage avec une lumière UV, l'enveloppe se rompant sous une contrainte de compression d'au moins 0,5 MPa et le liquide rempli (3) étant/devenant coloré lors de sa libération.

2. Une combinaison de microcapsules (1) selon la revendication 1, **caractérisée en ce que** les microcapsules (1) contiennent un liquide (3) comportant des couleurs différentes à sa libération et se rompent chacune sous des forces définies différentes.

3. Spray à utiliser dans le traitement des malpositions dentaires par gouttières en plastique ou aligneurs, **caractérisé en ce que** le spray comporte un type ou une combinaison de différents types de microcapsules (1) selon l'une quelconque des revendications précédentes.

4. Pâte à utiliser dans le traitement des malpositions dentaires par gouttières en plastique ou aligneurs, **caractérisée en ce que** la pâte comporte un type ou une combinaison de différents types de microcapsules (1) selon l'une quelconque des revendications précédentes 1 à 2.

5. Film à utiliser dans le traitement des malpositions dentaires par gouttières en plastique ou aligneurs, **caractérisé en ce que** le film comporte un type ou une combinaison de différents types de microcapsules (1) selon l'une quelconque des revendications précédentes 1 à 2.

6. Film selon la revendication 5, **caractérisé en ce que** le film est adhésif.

7. Poudre à utiliser dans le traitement des malpositions dentaires par gouttières en plastique ou aligneurs, **caractérisée en ce que** la poudre comporte un type ou une combinaison de différents types de microcapsules (1) selon l'une quelconque des revendications précédentes 1 à 2.

8. Un aligneur (5) et une ou plusieurs microcapsules (1) appliquées sur la face interne de l'aligneur, la ou chaque microcapsule étant selon la revendication 1.
